(19) Europäisches Patentamt / European Patent Office / Office européen des brevets

(11) **EP 3 625 190 B1**

(12) **EUROPEAN PATENT SPECIFICATION**

(45) Date of publication and mention
of the grant of the patent:
**23.08.2023 Bulletin 2023/34**

(21) Application number: **17724547.9**

(22) Date of filing: **17.05.2017**

(51) International Patent Classification (IPC):
**C04B 28/08** (2006.01)       **C04B 7/02** (2006.01)
**C04B 7/32** (2006.01)        **C04B 7/34** (2006.01)
**C04B 18/08** (2006.01)       **C04B 18/14** (2006.01)

(52) Cooperative Patent Classification (CPC):
(C-Sets available)
**C04B 28/08; C04B 7/02; C04B 7/323; C04B 7/34;
C04B 18/08; C04B 18/146;** C04B 2103/0088;
C04B 2111/00482; C04B 2111/00637;
C04B 2111/28; C04B 2111/62; Y02W 30/91  (Cont.)

(86) International application number:
**PCT/EP2017/061896**

(87) International publication number:
**WO 2018/210418 (22.11.2018 Gazette 2018/47)**

(54) **GROUND GRANULATED BLAST SLAG BASED BINDER, DISCOLOURED MORTAR OR CONCRETE INCLUDING SAID BINDER AND THEIR PREPARATION METHODS**

BINDEMITTEL AUF DER BASIS VON GEMAHLENER GRANULIERTER HOCHOFENSCHLACKE, ENTFÄRBTER MÖRTEL ODER BETON MIT DIESEM BINDEMITTEL UND HERSTELLUNGSVERFAHREN DAFÜR

LIANT À BASE DE LAITIER DE HAUT FOURNEAU GRANULÉ ET BROYÉ, MORTIER OU BÉTON DÉCOLORÉ COMPRENANT LEDIT LIANT ET LEURS PROCÉDÉS DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.03.2020 Bulletin 2020/13**

(73) Proprietors:
• **Ecocem Materials Limited
Dublin 3 D03E0C0 (IE)**
• **Université Paul Sabatier Toulouse III
31400 Toulouse (FR)**
• **Ecocem France
13100 Aix-en-Provence (FR)**

(72) Inventors:
• **GAO, Xiaoxiao
31077 Toulouse Cedex 4 (FR)**
• **CYR, Martin
31077 Toulouse Cedex 4 (FR)**

• **FROUIN, Laurent
75012 Paris (FR)**
• **MUSIKAS, Claude
91440 Bures sur Yvette (FR)**

(74) Representative: **Plasseraud IP
66, rue de la Chaussée d'Antin
75440 Paris Cedex 09 (FR)**

(56) References cited:
**JP-A- H0 781 986      JP-A- H0 867 545**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C04B 28/08, C04B 14/30, C04B 20/008,
C04B 22/14, C04B 2103/408;
C04B 28/08, C04B 14/305, C04B 20/008,
C04B 22/0013, C04B 2103/40;
C04B 28/08, C04B 14/305, C04B 20/008,
C04B 22/12, C04B 24/16;
C04B 28/08, C04B 14/307, C04B 20/008,
C04B 22/126, C04B 24/16;
C04B 28/08, C04B 14/308, C04B 20/008,**

**C04B 22/128, C04B 24/16;
C04B 28/08, C04B 20/008, C04B 22/06,
C04B 22/068, C04B 24/16**

## Description

### Field of the Invention

The technical field of the invention relates to hydraulic mineral binders including Ground Granulated Blast Slag (GGBS), which are used in settable and hardenable compositions, such as mortar or concrete compositions.

More particularly, the invention relates to binders and to settable and hardenable compositions for the building industry, that include at least GGBS as hydraulic binder as well as an additive that reduces or eliminates undesirable colouring on the surface of these compositions as they are set and hardened.

The invention concerns also the methods of preparation of these GGBS-based binders, of these dry or wet settable and hardenable compositions.

The building applications of the so-obtained set and hardened products are also in the field of the invention.

### Background Art

Slag rich mortars and concretes, including slag portland blended and geopolymer-based cements, turn a blue/green colour after setting & hardening. When the concrete or the mortar is exposed to air, the specific blue green colour of exterior surface turns to "grey" (cement concrete) or "white" (slag concrete). However, if the concrete rests long time in the framework or cured under the water (cases for precast), it maintains the blue/green colour for up to the entire service life of the concrete. This specific colour is of particular concern in concrete applications where visual aesthetics are important.

The cause of this blue/green colour is not well understood. However, most of the researchers attribute the colouration to the complex reaction of sulfur from GGBS raw material (containing approximately 1% S) with other compounds during the hydration process.

Moreover, WO2012/083384A1 discloses a settable composition comprising a cementitious component including slag, a sulfur scavenging component including a zinc compound (zinc oxide, zinc sulfate and zinc carbonate), and an alkaline activator. Zinc oxide, zinc sulfate or zinc carbonate is supposed to eliminate colouration of the settable material.

WO2014/013199A1 also describes a binder comprising a ground granulated blast furnace slag and at least one mono-, di- or trivalent metal salt selected from the group consisting of bismuth, copper, silver and tin salts, (ranked in a decreased order of effectiveness in preventing discolouration : $Bi_2(SO_4)_3 > CuSO_4 > CuNO_3 > Cu(OH)_2 > SnSO_4$). These salts are presented as capable of forming, during mixing with said slag, a metal sulfide for which the solubility product $K_{sp}$, measured at 25°C, is less than $10^{-10}$.

Both inventions according to WO2012/083384A1 and WO2014/013199A1 are based on the hypothesis that the undesirable colour comes from sulfides ($S^{2-}$), and that the addition of the claimed salts in the binder can precipitate the sulfides as ZnS, and then solve the colour issues. But this hypothesis is disputable. This could explain the proposals according to WO2012/083384A1 and WO2014/013199A1 are improvable.

JP2009091207A discloses a concrete block obtained from a binder and an aggregate, wherein the binder contains at least 30 wt.% of a blast furnace slag fine powder. The surface of the concrete block is treated with an oxidizing agent [005],[007],[0012]. The blue colour resulting from the reaction of the sulfur component of the blast-furnace slag with the oxide in cement thus disappears. The oxidising agents are chosen from hydrogen peroxide, potassium permanganates, sodium hypochlorite. These oxidising agents are not mixed with the binder and/or the aggregate before or during the preparation of the wet composition leading to the concrete block. This technical proposal is also improvable in terms of efficiency.

JPH0781986A discloses a blast furnace cement composed of sufficient amount of an oxidizing agent to oxidize the heavy metal sulfide present in the blast furnace water granulated slag. The presumed effect is to obtain from this cement, a cured body having a pale color or the same hue as that of portland cement by preventing the blue coloring caused, at the time of hydration, by curing of a blast furnace cement. Calcium peroxide ($CaO_2$) which purity is 49%, is the oxidizing agent, added to commercial blast furnace cement at a ratio of 0.25-2wt%, which corresponds to a bit less than 0.25-2% with respect to the commercial blast furnace cement dry weight. As $CaO_2$ purity is 49% and providing the commercial blast furnace cement contains 50% of Granulated Blast Furnace Slag (GBFS), it means that the real % of $CaO_2$ with respect to GBFS is 0.25:100.25*100=0.249, 0,49*0.249 = 0.122*2=<u>0.244%</u> and 2:102=0.0196*100=1.96, 0.49*1.96 =0.96 *2 = <u>1.92</u> % of GBFS dry weight. This discolouring composition is improvable in terms of efficiency.

JPH0867545A discloses a hydrated material of blast furnace water-crushed slag containing:

- blast furnace water-crushed slag powder, (-1-water-granulated blast furnace slag Blaine 8000 $cm^2$/g : 0.9 kg);
- blast-furnace slag cement B species of Nittetsusemento Co., Ltd. NEM-B; trade name : 3.0 kg including 0.9 kg = 30% of -2- ground granulated blast-furnace slag);
- blast furnace slag fine aggregate -3- (particle size 1.2 ~ 0.0 74 mm) : 1.2 kg;

- early-strength Portland cement: 0.9 kg;
- manganese dioxide powder 2.4 µm manufactured by Showa Chemical Co., Ltd.: 9.0g [0.1-10 parts for 100 parts of the hydrated material of blast furnace water-crushed slag]; as there are only 3.3 kg (55%) of GGBS (-1- -2- -3-) on 6kg of hydrated material, there are 0.18-18 parts of MnO2 for 100 parts of GGBS, i.e 0.18/100.18=0.18% to 18/118=15.25% of MnO2 with respect to GGBS;
- water.

This hydrated material presumably enables the reduction in cost for coloring the hardened thanks to the lowering of the necessary amount of coloring agent and makes it possible to prevent a verdigris color to the benefit of a white-gray color.

These results are improvable.

**Objectives of the invention**

In this context, the invention aims at addressing at least one of the above problems and/or needs, through fulfilling at least one of the following objectives:

- **a-** Providing a GGBS-based binder or a mortar or concrete composition including said GGBS-based binder, which are not prone to develop an undesirable colour as the setting and the hardening **occur**.
- **b-** Providing a GGBS-based binder or a mortar or concrete composition including said GGBS-based binder, comprising an active discolourating additive which is more efficient than the known zinc oxide, zinc sulfate, zinc carbonate, $Bi_2(SO_4)_3$, $CuSO_4$, $CuNO_3$, $Cu(OH)_2$, $SnSO_4$, $CaO_2$, or $MnO_2$.
- **c-** Providing a GGBS-based binder or a mortar or concrete composition including said GGBS-based binder, comprising an active discolourating additive which is efficient and cheap.
- **d-** Providing a GGBS-based binder or a mortar or concrete composition including said GGBS-based binder, comprising an active discolourating additive which is efficient and environmentally-friendly.
- **e-** Providing a simple and cheap method of preparation of the GGBS-based binder or the mortar or concrete composition including said GGBS-based binder, which complies with at least one of the objectives -a- to -d-.
- **f-** Providing a simple and cheap method of preparation of a wet form of the GGBS-based binder or a mortar or concrete composition including said GGBS-based binder.
- **g-** Providing hardened products for the building industry including GGBS as at least partial binder, which are not undesirably coloured, all their life long.
- **h-** Providing a new ingredient for binder or settable and hardenable compositions, which prevents undesirable colouration in the final set and hardened products (e.g. buildings or civil engineering works or elements thereof, coatings, fillers, screeds, tiles adhesives and/or internal or external insulation systems).

**Summary of the invention**

It follows that the invention pertains to a GGBS-based binder comprising:

- at least one GGBS;
- at least one oxidant O of the GGBS sulphur compounds, particularly of the species $S_3^-$ of said GGBS sulphur compounds, in the oxidation reaction which transforms the GGBS sulphur compounds, particularly of the species $S_3^-$ of said GGBS sulphur compounds, into colourless sulphur species;
- and at least one oxidation catalyst OC in said oxidation reaction.

It is to the credit of the inventors to have discovered that one of the possible causes of the undesirable colouration could be the $S_3^-$ species and to have judiciously selected oxidants O and oxidation catalysts OC adapted, notably, to these $S_3^-$ species.

In another aspect, the invention concerns a method for the preparation of the GGBS-based binder as above mentioned, said method comprising mixing of at least one GGBS with at least one oxidant O and at least one oxidation catalyst OC of the GGBS sulphur compounds, particularly of the species $S_3^-$ of said GGBS sulphur compounds.

In another aspect, the invention concerns a composition, in particular a mortar or concrete composition comprising:

- at least one GGBS-based binder; particularly the GGBS-based binder as above mentioned,
- possibly at least one hydraulic binder different from the GGBS-based binder, said hydraulic binder being preferably selected from the group comprising - or even better consisting in - : Portland cements, Portland-fly ash cements, Portland pozzolan cement, Portland silica fume cements, Masonry cements, Expansive cements, White blended cements, Coloured cements, Very finely ground cements, Pozzolan-lime cements, Supersulfated cements, Calcium sulfoaluminate cements, "Natural" cements, Geopolymer cements, sodium metasilicate and mixtures thereof,
- aggregates,
- and, optionally at least one additive.

In another aspect, the invention concerns a composition, in particular a mortar or concrete composition comprising:

- at least one GGBS-based binder; particularly the GGBS-based binder as above mentioned,
- at least one oxidant O of the GGBS sulphur compounds, particularly of the species $S_3^-$ of said GGBS sulphur compounds, in the oxidation reaction which transforms the GGBS sulphur compounds, particularly of the species $S_3^-$ of said GGBS sulphur compounds, into colourless sulphur species;
- at least one oxidation catalyst OC in said oxidation reaction;
- possibly at least one dispersing agent for dispersing O and/or OC in an aqueous medium;
- possibly at least one hydraulic binder different from the GGBS-based binder, said hydraulic binder being preferably selected from the group comprising - or even better consisting in - : Portland cements, Portland-fly ash cements, Portland pozzolan cement, Portland silica fume cements, Masonry cements, Expansive cements, White blended cements, Coloured cements, Very finely ground cements, Pozzolan-lime cements, Supersulfated cements, Calcium sulfoaluminate cements, "Natural" cements, Geopolymer cements, sodium metasilicate and mixtures thereof;
- aggregates;
- and, optionally at least one additive.

In another aspect, the invention concerns a method for the preparation of the as above mentioned composition, said method comprising mixing of all the components of the composition, and wherein, preferably, an aqueous dispersion of at least one oxidant O and of at least one oxidation catalyst OC is prepared and is mixed with GGBS, said method more preferably including a curing step of said aqueous dispersion and/or of the mixture of said aqueous dispersion with GGBS, said curing step consisting in placing said aqueous dispersion and/or said mixture at a temperature comprised greater than or equal to 30°C, preferably comprised between 35°C and 50°C, during at least 0.5 h, preferably between 1h and 48h, at ambient atmosphere.

The introduction of O and/or OC can occur in one or several times at any time of the mixing.

In another aspect, the disclosure concerns a wet formulation comprising a mixture of water, of the as above defined GGBS-based binder and/or of the as above mentioned composition, in particular the mortar or concrete composition comprising GGBS-based binder.

In another aspect, the disclosure concerns a kit for the preparation of wet formulation according to the invention, comprising:

- at least one GGBS-based binder; particularly the GGBS-based binder as above mentioned; and/or
- at least one oxidant O of the GGBS sulphur compounds, particularly of the species $S_3^-$ of said GGBS sulphur compounds, in the oxidation reaction which transforms the GGBS sulphur compounds, particularly of the species $S_3^-$ of said GGBS sulphur compounds, into colourless sulphur species; and
- at least one oxidation catalyst OC in said oxidation reaction;

said at least one oxidant O and said at least one oxidation catalyst OC being under the form of:

- a dry mix of O, OC and at least one dispersing agent for dispersing O and/or OC in an aqueous medium;
- a dry form of O and an aqueous dispersion of OC including at least one dispersing agent for dispersing OC;
- a dry form of OC and an aqueous dispersion of O including at least one dispersing agent for dispersing O;
- or an aqueous dispersion of O and OC including at least one dispersing agent for dispersing O and OC.

In another aspect, the invention concerns a method for the preparation of a wet formulation as above mentioned, said method comprising mixing water with the whole or a part of the GGBS-based binder as above mentioned and/or with the whole or a part of the mortar or concrete composition as above mentioned, wherein, preferably, an aqueous dispersion of at least one oxidant O and/or of at least one oxidation catalyst OC is prepared and is mixed with GGBS, said method more preferably including a curing step of said aqueous dispersion and/or of the mixture of said aqueous dispersion with GGBS, said curing step consisting in placing said aqueous dispersion and/or said mixture at a temperature comprised greater than or equal to 30°C, preferably comprised between 35°C and 50°C, during at least 0.5 h, preferably between 1h and 48h, at ambient atmosphere.

The introduction of the whole or a part of O and/or OC can occur before and/or during and/or after the introduction of water.

In another aspect, the invention concerns a method of making buildings or civil engineering works or elements thereof, coatings, fillers, screeds, tiles adhesives and/or internal or external insulation systems, from the wet formulation as above mentioned, which hardens when exposed to the air.

In another aspect, the invention concerns the use of:

- at least one oxidant O of the GGBS sulphur compounds, particularly of the species $S_3^-$ of said GGBS sulphur compounds, in the oxidation reaction which transforms the GGBS sulphur compounds, particularly of the species $S_3^-$ of said GGBS sulphur compounds, into colourless sulphur species;
- at least one oxidation catalyst OC in said oxidation reaction;
- possibly at least one dispersing agent for dispersing O and/or OC in an aqueous medium;

for discolouring hardened GGBS containing compositions, in particular mortars or cements compositions.

In another aspect, the disclosure concerns a method for discolouring hardened GGBS containing mortars or concrete consisting in combining GGBS with:

- at least one oxidant O of the GGBS sulphur compounds, particularly of the species $S_3^-$ of said GGBS sulphur compounds, in the oxidation reaction which transforms the GGBS sulphur compounds, particularly of the species $S_3^-$ of said GGBS sulphur compounds, into colourless sulphur species;
- at least one oxidation catalyst OC in said oxidation reaction;

possibly at least one dispersing agent for dispersing O and/or OC in an aqueous medium.

**Definitions**

According to the terminology of this text, the following non limitative definitions have to be taken into consideration:

- Every singular designates a plural and reciprocally.
- "GGBS" or "GGBFS": Ground Granulated Blast Furnace Slag, which is equivalent to blast furnace slag, Granulated Blast Furnace Slag (GBFS), blast furnace water-crushed slag powder and blast furnace slag fine aggregate.
- "*binder*" refers to any material or substance that holds or draws other materials together to form a cohesive whole mechanically, chemically, or as an adhesive.
- "*mortar*" refers to a material composed of binder(s), sand, water and admixtures.
- "*concrete*" refers to a material composed of binder(s), gravel, sand, water and admixtures etc.
- "*cement*" is a mineral binder, free from any organic compound. It includes slag portland blended and geopolymer-based cements.

**Detailed description of the invention**

*Binder*

The binder contains GGBS which is a glassy granular material obtained by quenching molten GGBFS in water, and then by grinding the quenched product to improve GGBS reactivity. GGBS is essentially composed of $SiO_2$, $CaO$, $MgO$, and $Al_2O_3$, which are also common components in commercial silicate glasses. GGBS is used as partial substitute of Portland cement in OPC binder (OPC: Ordinary Portland Cement). Replacement levels for GGBS vary from 30% to up to 85%. Typically 40 to 50% is used in most instances. GGBS makes it possible to decrease the hydration heat of cement and improve the binder resistance to freezing, thawing, chemicals and seawater. GGBS is also beneficial to concrete structures that require high durability. As substitute of OPC clinkers, GGBS shrinks the environmental impact of OPC manufacture which is energy-guzzling which generates huge amounts of $CO_2$ issued from the thermal decomposition of limestone, a material used to produce OPC clinkers.

GGBS reacts like Portland cement when in contact with water. But as the rate of reaction is slower, an activator is necessary. The calcium hydroxide released when Portland cement reacts with water serves to activate GGBS, hence GGBS is normally combined with Portland cement. It can be also, sulfate salts, alkaline solution etc. Among these activators, high alkaline solution can boost the rate of hydration much efficiently.

It important to emphasize the fact OC behaves as a catalyst. It means that its concentration is low and OC is still present at the end of the reaction.

This low concentration of activity is interesting because it limits the risk of damaging the settable and hardenable composition including the GGBS-based binder. This low concentration is also not insignificant on an economic point of view.

It is quite surprising to note that the catalytic way of action of OC in this second embodiment, is possible a so complex medium, namely a cementitious composition including GGBS. One could have feared a catalyst poisoning.

Preferably, O is different from OC and/or is consumed during said oxidation reaction so that the initial $[O^i]$ concentration in % w/w of the GGBS dry weight, is reduced of at least, in an increasing order of preference, 50%, 60%, 70%, 80%, 90%, 95%, 99%.

In a preferred embodiment, the binder comprises at least one dispersing agent for dispersing O and/or OC in an aqueous medium.

As far as the oxidant O is concerned, its concentration [O] expressed in % w/w of the GGBS dry weight, and given hereafter in an increased order of preference is advantageously:

$$0.5 \leq [O] \leq 15 \,;\, 0.7 \leq [O] \leq 10 \,;\, 0.8 \leq [OA] \leq 8 \,;\, 0.9 \leq [OA] \leq 6.$$

O is preferably chosen among in the group comprising - or even better consisting in- :

- peroxides, preferably $H_2O_2$, calcium peroxides;
- peroxide salts, preferably perborates, persulfates, peroxydisulfuric salts, more preferably sodium persulfate;
- halogens, preferably halogens which oxidation state is greater than or equal to 1, more preferably halogen-oxo-acid salts; chlorates (I), (III), (V) and/or(VII), iodates, periodates, bromates, borates, perborates, more preferably sodium bromate, sodium iodate;
- peroxhydrates;
- sulfite salts, preferably sodium sulfites;
- and mixtures thereof.

As far as the oxidation catalyst OC is concerned, its concentration [OC] expressed in % w/w of the GGBS dry weight, and given hereafter in an increased order of preference is :

$$0.01 \leq [OC] \leq 6 \,;\, 0.05 \leq [OA] \leq 5 \,;\, 0.06 \leq [OA] \leq 4 \,;\, 0.07 \leq [OA] \leq 3.$$

OC is chosen in the group comprising - or even better consisting in - : $MnOz$; $MnO$ ; $V_2O_5$; activated carbon ; $Cr_2O_3$ ; $Fe_2O_3$ ; $TiO_2$; $CuO$ ; $Co_2O_3$ ; $NiO$ ; $NiO_2$ ; and mixtures thereof. $MnOz$; $MnO$ are preferred OCs.

Advantageously, the oxidation catalyst OC has a granulometry D50 comprised between 1 and 30 $\mu$m, preferably between 2 and 25 $\mu$m, and more preferably between 3 and 20 $\mu$m. In an embodiment, OC D50 can be between 3 and 10 $\mu$m. In another embodiment, OC D50 can be between 12 and 20 $\mu$m.

The granulometry D50 is measured by means of a CILAS 1090 LD Laser Granulometer (range 0.04 $\mu$m - 500.00 $\mu$m).

The oxidation catalysts OC according to the invention includes non-supported (or bulk catalysts) and supported catalysts with supports as $SiO_2$, $Al_2O_3$, zeolites, nanotubes etc.

According to a noteworthy feature of the invention, the supported catalysts are prepared as indicated hereafter: the active components are synthesized on the support like $SiO_2$, $Al_2O$, zeolites, nanotubes etc. by impregnation technique using metal precursors to deposit onto the support surface, and then by post-treatments (like drying, calcinations, forming, activation) to transform the precursors into the required active compound, e.g.: $MnO_2/SiO_2$.

The supported catalyst has the advantage to have a great specific surface.

As far as the dispersing agent is concerned, it is advantageous according to the invention to choose it in the group comprising - or even better consisting in - : ammonium lauryl sulfate, sodium lauryl sulfate, sodium laureth sulfate, Sodium docusate, perfluorobutanesulfonic acid, perfluorooctanesulfonic acid, sodium dodecylbenzene-sulfonate, perfluorononanoic acid, perfluorooctanoic acid, sodium stearate, phospholipids, sulfolipids and mixtures thereof.

*Composition, in particular mortar or concrete compositions*

In a first formulation, the compositions, in particular mortar or concrete compositions according to the invention comprise:

- at least one GGBS-based binder; particularly the GGBS-based binder as above defined,
- possibly at least one hydraulic binder different from the GGBS-based binder, said hydraulic binder being preferably selected from the group comprising - or even better consisting in - : Portland cements, Portland-fly ash cements, Portland pozzolan cement, Portland silica fume cements, Masonry cements, Expansive cements, White blended cements, Coloured cements, Very finely ground cements, Pozzolan-lime cements, Supersulfated cements, Calcium sulfoaluminate cements, "Natural" cements, Geopolymer cements, sodium metasilicate and mixtures thereof;
- and aggregates,
- and, optionally at least one additive.

In a second formulation, the compositions, in particular mortar or concrete compositions according to the invention comprise:

- at least one GGBS-based binder; particularly the GGBS-based binder as above defined;
- at least one oxidant O of the GGBS sulphur compounds, particularly of the species $S_3^-$ of said GGBS sulphur compounds, in the oxidation reaction which transforms the GGBS sulphur compounds, particularly of the species $S_3^-$ of said GGBS sulphur compounds, into colourless sulphur species;
- at least one oxidation catalyst OC in said oxidation reaction;
- possibly at least one dispersing agent for dispersing O and/or OC in an aqueous medium;
- possibly at least one hydraulic binder different from the GGBS, said hydraulic binder being preferably selected from the group comprising - or even better consisting in - : Portland cements, Portland-fly ash cements, Portland pozzolan cement, Portland silica fume cements, Masonry cements, Expansive cements, White blended cements, Coloured cements, Very finely ground cements, Pozzolan-lime cements, Supersulfated cements, Calcium sulfoaluminate cements, "Natural" cements, Geopolymer cements, sodium metasilicate and mixtures thereof;
- aggregates;
- and, optionally at least one additive.

*GGBS-based binder*

Advantageously, the weight ratio *GGBS-based binder / whole hydraulic binder* of the mortar/concrete composition is between 20/80 and 100/0.

*Binder different from GGBS-based binder (non GGBS-based binder)*

These mortar or concrete composition preferably comprises at least one binder different from the GGBS-based binder, preferably selected in the group comprising - or even better consisting in- : Portland cements, Portland-fly ash cements, Portland pozzolan cement, Portland silica fume cements, masonry cements, expansive cements, White blended cements, coloured cements, very finely ground cements, pozzolan-lime cements, supersulfated cements, belite cements, calcium sulfoaluminate cements, "natural" cements, geopolymer cements, cements formed of pozzolanic mixtures optionally comprising fly ash, fumed silicas, limestone, calcined schiste and/or natural or calcined pozzolans; and mixtures thereof.

*Aggregates/Fillers*

Aggregates comprise a large category of particulate material used in construction, including sands, gravels, crushed stones, slag (non-ground), recycled concrete and geosynthetic aggregates. They serve as reinforcement to add strength to the overall composite material.

The mortar/concrete composition can also include:

\*fillers such as flours, for example based on quartz, limestone, barite or clays and mixtures thereof;
\*as well as light fillers, such as perlites, kieselguhr (diatomaceous earth), expanded mica (vermiculite) and foamed sand, and mixtures thereof.

The quantity of the aggregates/fillers in the mortar or concrete composition can suitably be (in % by weight) between 0 and 90, preferably between 20 and 80, and more preferably between 50 and 70, based on the total weight of the mortar or concrete composition and depending on the application.

*Additives*

Activator(s)

In order to promote the setting and/or the curing and/or the hardening of the binder, the mortar/concrete composition, advantageously, comprises at least one activator chosen in the group comprising - or even better consisting in- : the activators, preferably the alkaline activators and/or the sulfate activators and/or the slag microparticles based activators and/or the cement-based activators.

As examples of alkaline activators, one can quoted slaked lime, sodium hydroxide, potassium hydroxide, sodium silicate or potassium silicate.

Sulfate activators can be for instance calcium sulfates.

The activator is preferably incorporated under pulverulent form in the dry composition, before its mixing with water, so that a so-called ready-mix mortar/concrete composition is produced.

The dry activator can be mixed with the binders and/or aggregates/fillers.

Alternatively, an aqueous, preferably alkaline activating solution can be added to the other pulverulent components. In this case, the term two-component binder is used.

A concentration from 1 % to 10% by weight, with respect to the total weight of the composition, is an illustration of a preferred embodiment of the mortar/concrete according to the invention.

Other Additives than the actiyator(s)

*Water retentive agent*

A water retentive agent has the property to keep the water of mixing before the setting. The water is so trapped in the wet formulation paste which improves its bond. To some extent, the water is less absorbed by the support. Salting out on the surface is limited and evaporation is reduced.

The water retentive agent is preferably chosen in the group comprising: modified cellulose ethers and/or starches ethers and/or guar ether and their mixes, more preferably consisting of: methylcelluloses, methylhydroxypropylcelluloses, methylhydroxyethyl-celluloses and their mixes.

*Rheological agent*

The possible rheological agent (also named a "thickener") is preferably chosen in the group comprising, more preferably consisting of : clays, starch ethers, cellulose ethers and/or gums (e.g. Welan guar xanthane, succinoglycans), modified polysaccharides -preferably among modified starch ethers-, polyvinylic alcohols, polyacrylamides, clays, sepiolites, bentonites, and their mixes, and more preferably chosen in the group of clays, bentonite, montmorillonite.

*Defoamer/Antifoams*

The possible defoamer is preferably chosen in the group comprising, more preferably consisting of: polyether polyols and mixes thereof.

*Biocide*

The possible biocide is preferably chosen in the group comprising, more preferably consisting of: mineral oxides like zinc oxide and mixes thereof.

*Pigment*

The possible pigment is preferably chosen in the group comprising, more preferably consisting of: $TiO_2$, iron oxide and mixes thereof.

*Flame retardant*

The possible flame retardant (or flame proof agent), which makes it possible to increase the fire resistance and/or to shrink the speed of flame spreading of the composition is preferably chosen in the group comprising, more preferably consisting of:

- minerals preferably aluminium hydroxide [Al(OH)$_3$, ATH], magnesium hydroxide MDH, hydromagnesite, hydrates, red phosphorus, and boron compounds, preferably borates,
  - organohalogen compounds, preferably organochlorines and more preferably such as chlorendic acid derivatives and chlorinated paraffins; organobromines such as decabromodiphenyl ether (decaBDE), decabromodiphenyl ethane,
  - polymeric brominated compounds preferably brominated polystyrenes, brominated carbonate oligomers (BCO's), brominated epoxy oligomers (BEO's), tetrabromophthalic anyhydride, Tetrabromobisphenol A(TBBPA) and hexabromocyclododecane (HBCD).
  - antimony preferably pentoxide and sodium antimonite
  - organophosphorus compounds preferably organophosphate, TPP, RDP, BPADP, tri-o-cresyl phosphate,
  - phosphonates preferably DMMP and phosphinates.
  - chlorophosphates like TMCP and TDCP.

The composition according to the invention can also comprise some optional functional ingredients like:

- air-entraining agents (surfactants) chosen in the group comprising -ideally consisting in- natural resins, sulfated or sulfonated compounds, synthetic detergents, organic fatty acids and their mixes, preferably in the group comprising -ideally consisting in- the lignosulfonates, the basic soaps of fatty acids and their mixes, and, more preferably in the group comprising -ideally consisting in- the sulfonate olefins, the sodium lauryl sulfate de sodium and their mixes;
- accelerators (calcium salts, carbonates, preferably lithium or sodium and their mixes);
- retarders (tartric acid and its salts: sodium or potassium salts, citric acid and its salts: sodium (trisodic citrate) and their mixes;
- plasticizers;
- fibres;
- dispersion powders;
- wetting agents;
- polymeric resins;
- complexing agents and;
- aqueous dispersions.

Additives' concentration can be from 0,1% to 10% by weight of the total weight of the composition, in particular mortar or concrete composition .

## EXAMPLES

### -A- Materials and methods

GGBS: delivered from ECOCEM France (Fos/Mer) 2013.

Non GGBS-based binder: Portland cement (in short CEMI): CEMI 52.5R, Lafarge. Activator: Sodium metasilicate: provided by SILMACO NV, powder, disodium metasilicate anhydrous (module 1.0) 2013.

O1: Sodium persulfate : (Na$_2$S$_2$O$_8$: Sigma-Aldrich, $\geq$ 99%)
O2: Sodium iodate (NaBrOs: Sigma-Aldrich, $\geq$ 99%)
O3: Sodium iodate (NaIO$_3$: Sigma-Aldrich, $\geq$ 99%)
O4: Calcium peroxide (CaO$_2$: Solvay, $\sim$ 80%)

OC1: MnO$_2$ is supplied by Eramet company with 81% of purity and average size D$_{50}$ around 16.0 $\mu$m.

OC2: The MnO$_2$ is ground on a "Ringmill" with rate of 1400 rpm for 25s (x 2 times). Its particle size decreases from 16.00 $\mu$m to 5.77 $\mu$m.

Dispersing agent: Orotan 1124 from Dow chemicals (hydrophilic copolymer);
SDS: Sodium dodecylsulfate from ACROS (85% purity).

### -B- Colorimetry

The parameter used to assess the discolouring effect the compositions according to the invention is the CIE L*a*b* (CIELAB). CIE L*a*b* (CIELAB) is a color space specified by the International Commission on Illumination (French Commission internationale de l'éclairage, hence its CIE initialism). It describes all the colors visible to the human eye and was created to serve as a device-independent model to be used as a reference.

The three coordinates of CIELAB represent the lightness of the color ($L^* = 0$ yields black and $L^* = 100$ indicates diffuse white; specular white may be higher), its position between red/magenta and green ($a^*$, negative values indicate green while positive values indicate magenta) and its position between yellow and blue ($b^*$, negative values indicate blue and positive values indicate yellow). The asterisk ($^*$) after L, a and b are pronounced star and are part of the full name, since they represent $L^*$, $a^*$ and $b^*$, to distinguish them from Hunter's L, a, and b.

The device used to implement the colorimetric measures of CIE $L^*a^*b^*$ (CIELAB) is MINOLTA CM2500d.

The tuning of this device and the conditions of the colorimetric measures are the followings spec. mode: MAV (SCI+SCE):

    wavelengthmin = 360
    wavelengthmax = 740
    wavelengthinc = 10
    wavelengthdim = 39

-C- *Experiments*

*EXAMPLES (1) - (4): Oxidants O*

**(1) O1: Sodium persulfate**

Sodium persulfate is an inorganic compound with the formula $Na_2S_2O_8$. It is completely soluble in water with solubility around 238 g/l at 20°C. It is usually used as a detergent component, and also used as a soil conditioner and soil remediation. It can decompose and produce $O_2$ (as shown in equation 3), and $O_2$ can oxidize the blue-caused trisulphur species into sulfate or sulfite species

$$H_2O + S_2O_8{}^{2-} \rightarrow SO_4{}^{2-} + H_2SO_4 + 1/2O_2 \qquad Eq.\ (3)$$

Formulations of 100% GGBS activated by 4% of disodium metasilicate anhydrous (module 1.0) is used for the casting. The chemical agents are added to the dry mixtures before casting. The paste is casted into a plastic tube covered with lid to avoid the contact with air. 21 days after casting, the samples are demoulded, and split into half to observe the interior colour.

Table 1 shows the CIE $L^*a^*b^*$ measures of samples, after 21 days conserved in plastic tubes. The exterior colour of the samples varies from blue to colourless with the increasing of $Na_2S_2O_8$ percentage. As shown in **Table 1**, comparing to reference, along with the increase of sodium persulfate addition, the value $L^*$ moves to diffuse white, $a^*$ moves from negative (green) to positive and $b^*$ moves from negative (blue) to positive values. 4% (in mass of GGBS) is the preferred concentration of oxidant O to eliminate the blue/green color.

**Table 1 Test for different additions of sodium persulfate**

|     | Ref. | 1%   | 2%   | 3%   | 4%   |
| --- | ---- | ---- | ---- | ---- | ---- |
| L*  | 46.3 | 45.3 | 49.2 | 54.7 | 69.6 |
| a*  | -7.8 | -7.6 | -6.9 | -5.9 | 0.17 |
| b*  | -1.1 | -0.8 | -1.0 | 1.3  | 7.9  |

**(2) O2: Sodium bromate:**

Sodium iodate ($NaBrO_3$) is an oxidizing agent.

The same preparation and assessment protocols as in example 1 are carried out.

Table 2 shows the CIE $L^*a^*b^*$ measures of samples after 21 days conserved in plastic tubes. As shown in Table 2, comparing to reference, with 1% of $NaBrO_3$ addition the value $L^*$ moves to diffuse white, $a^*$ moves from negative (green) to positive and $b^*$ moves from negative (blue) to positive values. 1% is the preferred concentration of oxidant O to eliminate the blue/green color.

**Table 2 Sample color for different addition of NaBrO$_3$ in the GGBS paste**

|       | Ref.  | 1%   |
|-------|-------|------|
| L*    | 46.3  | 72.1 |
| a*    | -7.8  | 1.3  |
| b*    | -1.1  | 7.4  |

**(3) O3: Sodium iodate:**

Sodium iodate (NaIO$_3$) is an oxidizing agent. It has a low solubility in water of 19.8 g/l. The same preparation and assessment protocols as in example 1 are carried out.

Table 3 shows the CIE L*a*b* measures of samples after 21 days conserved in plastic tubes. As shown in Table 3, comparing to reference, with increase of NaIO$_3$ addition the value L* moves to diffuse white, a* moves from negative (green) to positive and b* moves from negative (blue) to positive values. 1% is the preferred concentration of oxidant O to eliminate the blue/green color.

**Table 3 Sample color for different addition of NaIO$_3$ in the GGBS paste**

|       | Ref.  | 1%   | 2%   |
|-------|-------|------|------|
| L*    | 46.3  | 71.9 | 71.1 |
| a*    | -7.8  | 1.6  | 1.7  |
| b*    | -1.1  | 7.8  | 7.9  |

**(4) O4 : Calcium peroxide:**

Calcium peroxide (CaO$_2$) is an oxidizing agent but with very low solubility in water, inferior to 0.1 g/l.

The same preparation and assessment protocols as in example 1 are carried out. Table 4 shows the CIE L*a*b* measures of samples after several days conserved in plastic tubes. As shown in Table 4, comparing to reference, with increase of CaO$_2$ addition the value L* moves to diffuse white, a* moves from large value of negative (green) to small value of negative and b* moves from negative (blue) to positive value. 4% is the preferred concentration of oxidant O to eliminate the blue/green color.

**Table 4 Test for different addition of calcium peroxide**

|       | Ref.  | 2%   | 3%   | 4%   |
|-------|-------|------|------|------|
| L*    | 46.3  | 63.6 | 69.9 | 72.1 |
| a*    | -7.8  | -4.4 | -1.9 | -0.5 |
| b*    | -1.1  | 2.5  | 5.8  | 7.3  |

**EXAMPLES (5) & (6): Oxidation Catalyst OC**

**(5) OC1 : Manganese dioxide D50=16$\mu$m**

Manganese dioxide, having a black or brown colour, occurs naturally as the mineral pyrolusite. It can oxidize and catalyze sulphide solution with the following equations (5) and (6). Mn$_2$O$_3$ can be oxidized by oxygen to MnO$_2$ for reuse.

$$2R_2S + 8MnO_2 + H_2O \rightarrow R_2S_2O_3 + 2ROH + 4Mn_2O_3 \qquad \text{Eq. (5)}$$

$$2Mn_2O_3 + O_2 \rightarrow 4MnO_2 \qquad \text{Eq. (6)}$$

The same preparation and assessment protocols as in example 1 are carried out.

Table 5 shows the CIE L*a*b* measures of samples after 21 days.

The exterior colour of the samples varies from blue to colourless with the increasing of MnO$_2$ percentage.

With 0.5% of $MnO_2$ addition, the blue color disappears; and the samples give a grey appearance like cement. This grey color is kept for 7 days. After 7 days, a light blue colour appears with 0.5% of $MnO_2$ addition.

### (6) OC2: Manganese dioxide D50 around 5.7 μm

To increase the reactive surface area, a ground $MnO_2$(G) with average size $D_{50}$ around 5.7 μm is used.

The same preparation and assessment protocols as in example 1 are carried out, except that $MnO_2$ is dispersed in water with 0.5% (in mass of water) of a dispersant agent (Orotan 1124).

As shown in **Table 5**, along with the increase of $MnO_2$ addition, the value L* moves to diffuse white, a* moves from large value of negative (green) to small value of negative and b* moves from negative (blue) to positive value. With 0.5% of ground $MnO_2$ and 0.5% of dispersant agent, the a* moves to positive value, which means that no blue color is observed with this combination in 21 days' observation.

**Table 5 Sample color for different addition of $MnO_2$ in the GGBS paste 100% GGBS activated by 4% sodium metasilicate (21 days)**

|  | Ref. | 0.1% $MnO_2$ | 0.2% $MnO_2$ | 0.3% $MnO_2$ | 0.4% $MnO_2$ | 0.5% $MnO_2$ | 0.5% $MnO_2$(G) - 0.5% dispersant |
|---|---|---|---|---|---|---|---|
| L* | 46.3 | 42.9 | 40.9 | 47.6 | 49.8 | 64.6 | 65.4 |
| a* | -7.8 | -7.4 | -7.6 | -6.8 | -7.1 | -1.0 | 1.1 |
| b* | -1.1 | -1.2 | -0.3 | -0.5 | 0.5 | 5.8 | 8.4 |

### EXAMPLE (7) Effect of temperatures

A formulation with 50/50 GGBS/CEM II white cement (Lafarge) and 0.6% of colorant (Ton Pierre, Chryso) was tested curing at 20°C and 40°C respectively. The tested durations for 40°C is 1 day. After curing, the samples are put into salty water for color observation (30% NaCl solution). The heat curing helps the discoloration. Samples' color for 50/50 GGBS/CEMII with yellow colorant (standard mortar) cured at 20°C for 1 day and then conserved in salty water for one month, is darker (bluer) than the 40°C cured one for the same duration and after the same time of conservation in salty water. This latter shows only small zones of light blue color after 1 month conserved in salty water.

### EXAMPLE (8) Combination of Oxidant catalyst - Dispersant - Oxidant - curing temperature

A combination of OC2=$MnO_2$(G) & O1= Na2S2O8 with dispersant, oxidant and/or heat curing is implemented in this example.

A composition of 0.2% ground MnOz dispersed in 0.01% of dispersant/surfactant SDS (in powder) sodium dodecyl sulfate (SDS) is used. Firstly, SDS is dissolved in water, and then MnOz(G) and sodium persulfate are added into water. The solution is used for paste or mortar preparation.

Table 6a shows an example based on 100% GGBS activated by 4% sodium metasilicate. For (1), (2) and (3), the pastes are prepared as example 1 and cured at 20°C, for (4), the paste is prepared as example 1 and cured at 40°C for 1 day. For (1), (2) and (3), the blue color is observed, but for (4), the blue colour does not appear until the day of measurement (21 days). Table 6b shows the tests on 50/50 GGBS/White Cement with yellow colorant. For (5) and (6), the pastes are prepared at 20°C, for (7), the paste is cured at 40°C for 1 day. The blue color is observed for (5), but for (6) and (7), no blue color is observed.

Table 6 Sample color for different addition of $MnO_2$ in the GGBS paste

| a. For 100%GGBS activated by 4% sodium metasilicate | | | | |
|---|---|---|---|---|
|  | (1) | (2) | (3) | (4) |
| L* | 41.1 | 54.1 | 55.6 | 70.2 |
| a* | -7.9 | -7.1 | -6.5 | 1.0 |
| b* | 0.2 | 0.5 | 0.9 | 5.6 |

(continued)

| b. For 50/50 (GGBS/CEM II white cement) with yellow colorant | | | |
|---|---|---|---|
| | (5) | (6) | (7) |
| L* | 67.2 | 73.6 | 72.8 |
| a* | -1.3 | 3.3 | 2.7 |
| b* | 11.2 | 12.0 | 11.1 |

For 100% GGBS activated by 4% sodium metasilicate:

(1) 0.2% ground $MnO_2$ (20°C);
(2) 0.2% ground $MnO_2$ - 0.3% Sodium persulfate (20°C)
(3) 0.2% ground $MnO_2$ - 0.01% SDS - 0.3% Sodium persulfate (20°C);
(4) 0.2% ground $MnO_2$ - 0.01% SDS - 0.3% Sodium persulfate (40°C);

For 50/50 (GGBS/CEMII white cement) with yellow colorant:

(5) Reference (20°C);
(6) 0.2% ground $MnO_2$ - 0.01% SDS - 0.3% Sodium persulfate (20°C);
(7) 0.2% ground $MnO_2$ - 0.01% SDS - 0.3% Sodium persulfate (40°C).

Comments :

As $MnO_2$ is not soluble in water, the dispersant agent here helps the dispersion of $MnO_2$, and then increase the contact surface of $MnO_2$ and its efficacity as catalyst. The addition of sodium persulfate supplies oxygen source and increases the efficacity of $MnO_2$ as oxidation catalyst. The temperature is also favorable for the disappearance of blue/green color. The combination used in formulation (4) in Table 6a gives a final color clearer than combination shown in Table 5 - 0.5% $MnO_2$ (G) -0.5% dispersant. This combination is also effective to make disappear the blue color for the system GGBS/CEM II as shown in Table 6b.

**Claims**

1. Ground granulated blast furnace slag (GGBS)-based binder comprising:

   • at least one GGBS;
   • at least one oxidant O of the GGBS sulphur compounds, particularly of the species $S_3^-$ of said GGBS sulphur compounds, in the oxidation reaction which transforms the GGBS sulphur compounds, particularly of the species $S_3^-$ of said GGBS sulphur compounds, into colourless sulphur species;
   • and at least one oxidation catalyst OC in said oxidation reaction.

2. Binder according to claim 1 wherein O is different from OC and/or is consumed during said oxidation reaction so that the initial $[O^i]$ concentration in % w/w of the GGBS dry weight, is reduced of at least, in an increasing order of preference, 50%, 60%, 70%, 80%, 90%, 95%, 99% .

3. Binder according to claim 1 or 2 comprising at least one dispersing agent for dispersing O and/or OC in an aqueous medium.

4. Binder according to at least one of the preceding claims wherein the oxidant O concentration [O] expressed in % w/w of the GGBS dry weight, and given hereafter in an increased order of preference is:

$$0.5 \leq [O] \leq 15 \,;\, 0.7 \leq [O] \leq 10 \,;\, 0.8 \leq [O] \leq 8 \,;\, 0.9 \leq [O] \leq 6.$$

5. Binder according to at least one of the preceding claims, wherein the oxidant O is chosen in the group comprising -or even better consisting in- :

- peroxides, preferably HzOz, calcium peroxides;
- peroxide salts, preferably perborates, persulfates, peroxydisulfuric salts, more preferably sodium persulfate;
- halogens, preferably halogens which oxidation state is greater than or equal to 1, more preferably halogen-oxo-acid salts; chlorates (I), (III), (V) and/or(VII), iodates, periodates, bromates, borates, perborates, more preferably sodium bromate, sodium iodate;
- peroxhydrates;
- sulfite salts, preferably sodium sulfites;
- and mixtures thereof.

6. Method for the preparation of the GGBS-based binder according to at least one of the preceding claims, comprising mixing of at least one GGBS with at least one oxidant O and at least one oxidation catalyst OC of the GGBS sulphur compounds, particularly of the species $S_3^-$ of said GGBS sulphur compounds.

7. Composition, in particular mortar or concrete composition, comprising:

- at least one GGBS-based binder according to at least one of the claims 1 to 5,
- possibly at least one hydraulic binder different from the GGBS-based binder, said hydraulic binder being preferably selected from the group comprising - or even better consisting in - : Portland cements, Portland-fly ash cements, Portland pozzolan cement, Portland silica fume cements, Masonry cements, Expansive cements, White blended cements, Coloured cements, Very finely ground cements, Pozzolan-lime cements, Supersulfated cements, Calcium sulfoaluminate cements, "Natural" cements, Geopolymer cements, sodium metasilicate and mixtures thereof;
- and aggregates,
- and, optionally at least one additive.

8. Method for the preparation of the composition according to claim 7 comprising mixing of all the components of the composition, and wherein, preferably, an aqueous dispersion of at least one oxidant O and/or of at least one oxidation catalyst OC is prepared and is mixed with GGBS, said method more preferably including a curing step of said aqueous dispersion and/or of the mixture of said aqueous dispersion with GGBS, said curing step consisting in placing said aqueous dispersion and/or said mixture at a temperature comprised greater than or equal to 30°C, preferably comprised between 35°C and 50°C, during at least 0.5 h, preferably between 1h and 48h, at ambient atmosphere.

9. Method for the preparation of a wet formulation, comprising mixing water with the whole or a part of the GGBS-based binder according to at least one of the claims 1 to 5 or obtained from the method according to claim 6, and/or with the whole or a part of the composition according to claim 7 or obtained from the method according to claim 8, wherein, preferably, an aqueous dispersion of at least one oxidant O and/or of at least one oxidation catalyst OC is prepared and is mixed with GGBS, said method more preferably including a curing step of said aqueous dispersion and/or of the mixture of said aqueous dispersion with GGBS, said curing step consisting in placing said aqueous dispersion and/or said mixture at a temperature comprised greater than or equal to 30°C, preferably comprised between 35°C and 50°C, during at least 0.5 h, preferably between 1h and 48h, at ambient atmosphere.

10. Method of making buildings or civil engineering works or elements thereof, coatings, fillers, screeds, tiles adhesives and/or internal or external insulation systems, from the wet formulation prepared according to the method of claim 9, which hardens as exposed to the air.

11. Use of

- at least one oxidant O of the GGBS sulphur compounds, particularly of the species $S_3^-$ of said GGBS sulphur compounds, in the oxidation reaction which transforms the GGBS sulphur compounds, particularly of the species $S_3^-$ of said GGBS sulphur compounds, into colourless sulphur species;
- at least one oxidation catalyst OC in said oxidation reaction;
- possibly at least one dispersing agent for dispersing O and/or OC in an aqueous medium;

for discolouring hardened GGBS containing compositions, in particular mortars or cements compositions.

**Patentansprüche**

1. Bindemittel auf Basis von gemahlener granulierter Hochofenschlacke (GGBS), umfassend:

   • mindestens ein GGBS;
   • mindestens ein Oxidationsmittel O der GGBS-Schwefelverbindungen, insbesondere der $S_3^-$-Spezies der GGBS-Schwefelverbindungen, in der Oxidationsreaktion, das die GGBS-Schwefelverbindungen, insbesondere die $S_3^-$-Spezies der GGBS-Schwefelverbindungen, in farblose Schwefelspezies umwandelt;
   • und mindestens einen Oxidationskatalysator OC in der Oxidationsreaktion.

2. Bindemittel nach Anspruch 1, wobei O von OC verschieden ist und/oder während der Oxidationsreaktion verbraucht ist, so dass die anfängliche $[O^i]$-Konzentration in Gew.-% des GGBS-Trockengewichts in einer aufsteigenden Reihenfolge an Präferenz um mindestens 50%, 60%, 70%, 80%, 90%, 95%, 99% reduziert ist.

3. Bindemittel nach Anspruch 1 oder 2, umfassend mindestens ein Dispergiermittel zum Dispergieren von O und/oder OC in einem wässrigen Medium.

4. Bindemittel nach mindestens einem der vorhergehenden Ansprüche, wobei die Konzentration [O] des Oxidationsmittels O, die in Gew.-% des GGBS-Trockengewichts ausgedrückt ist, und im Folgenden in einer aufsteigenden Reihenfolge an Präferenz angegeben ist, beträgt:

$$0,5 \leq [O] \leq 15; \; 0,7 \leq [O] \leq 10; \; 0,8 \leq [O] \leq 8; \; 0,9 \leq [O] \leq 6.$$

5. Bindemittel nach mindestens einem der vorhergehenden Ansprüche, wobei das Oxidationsmittel O ausgewählt ist aus der Gruppe, umfassend - oder noch besser bestehend aus -:

   • Peroxide, vorzugsweise $H_2O_2$, Calciumperoxide;
   • Peroxidsalze, vorzugsweise Perborate, Persulfate, Peroxydischwefelsäuresalze, stärker bevorzugt Natriumpersulfat;
   • Halogene, vorzugsweise Halogene, deren Oxidationsstufe größer oder gleich 1 ist, stärker bevorzugt Halogenoxosäuresalze; Chlorate (I), (III), (V) und/oder (VII), Iodate, Periodate, Bromate, Borate, Perborate, stärker bevorzugt Natriumbromat, Natriumiodat;
   • Peroxhydrate;
   • Sulfitsalze, vorzugsweise Natriumsulfite;
   • und Mischungen davon.

6. Verfahren zur Herstellung des Bindemittels auf Basis von GGBS nach mindestens einem der vorhergehenden Ansprüche, umfassend Mischen von mindestens einem GGBS mit mindestens einem Oxidationsmittel O und mindestens einem Oxidationskatalysator OC der GGBS-Schwefelverbindungen, insbesondere der $S_3^-$-Spezies der GGBS-Schwefelverbindungen.

7. Zusammensetzung, insbesondere Mörtel- oder Betonzusammensetzung, umfassend:

   • mindestens ein Bindemittel auf GGBS-Basis nach mindestens einem der Ansprüche 1 bis 5,
   • gegebenenfalls mindestens ein hydraulisches Bindemittel, das sich von dem Bindemittel auf Basis von GGBS unterscheidet, wobei das hydraulische Bindemittel vorzugsweise ausgewählt ist aus der Gruppe, umfassend - oder noch besser bestehend aus -: Portlandzemente, Portland-Flugaschezemente, Portland-Puzzolanzemente, Portland-Silikastaubzemente, Mauerwerkszemente, Expansionszemente, Weißmehlzemente, Farbzemente, sehr fein gemahlene Zemente, Puzzolan-Kalk-Zemente, supersulfatierte Zemente, Calciumsulfoaluminatzemente, "natürliche" Zemente, Geopolymerzemente, Natriummetasilikat und Mischungen davon;
   • und Aggregate,
   • und, gegebenenfalls, mindestens einen Zusatzstoff.

8. Verfahren zur Herstellung der Zusammensetzung nach Anspruch 7, umfassend Mischen aller Komponenten der Zusammensetzung, und wobei, vorzugsweise, eine wässrige Dispersion mindestens eines Oxidationsmittels O und/oder mindestens eines Oxidationskatalysators OC hergestellt wird und mit GGBS gemischt wird, wobei das Verfahren stärker bevorzugt einen Schritt der Aushärtung der wässrigen Dispersion und/oder der Mischung der wässrigen Dispersion mit GGBS umfasst, wobei der Schritt der Aushärtung darin besteht, dass die wässrige Dispersion und/oder die Mischung während mindestens 0,5 h, vorzugsweise zwischen 1 h und 48 h, bei Umgebungsatmosphäre auf eine Temperatur, umfassend mehr als oder gleich 30°C, vorzugsweise umfassend zwischen 35°C und 50°C, gebracht wird.

9. Verfahren zur Herstellung einer Nassformulierung, umfassend Mischen von Wasser mit dem gesamten oder einem Teil des Bindemittels auf Basis von GGBS nach mindestens einem der Ansprüche 1 bis 5 oder erhalten nach dem Verfahren nach Anspruch 6, und/oder mit der gesamten oder einem Teil der Zusammensetzung nach Anspruch 7 oder erhalten nach dem Verfahren nach Anspruch 8,
wobei, vorzugsweise, eine wässrige Dispersion mindestens eines Oxidationsmittels O und/oder mindestens eines Oxidationskatalysators OC hergestellt wird und mit GGBS gemischt wird, wobei das Verfahren stärker bevorzugt einen Schritt der Aushärtung der wässrigen Dispersion und/oder der Mischung der wässrigen Dispersion mit GGBS umfasst, wobei der Schritt der Aushärtung darin besteht, dass die wässrige Dispersion und/oder die Mischung während mindestens 0,5 h, vorzugsweise zwischen 1 h und 48 h, bei Umgebungsatmosphäre auf eine Temperatur, umfassend mehr als oder gleich 30 °C, vorzugsweise umfassend zwischen 35 °C und 50 °C, gebracht wird.

10. Verfahren zur Herstellung von Gebäuden oder Bauwerken oder Elementen davon, Beschichtungen, Füllstoffen, Estrichen, Fliesenklebern und/oder inneren oder äußeren Isoliersystemen, ausgehend von der feuchten Formulierung, hergestellt nach dem Verfahren nach Anspruch 9, die aushärtet, wenn sie der Luft ausgesetzt wird.

11. Verwendung von

   • mindestens eines Oxidationsmittels O der GGBS-Schwefelverbindungen, insbesondere der $S_3^-$-Spezies der GGBS-Schwefelverbindungen, in der Oxidationsreaktion, das die GGBS-Schwefelverbindungen, insbesondere die $S_3^-$-Spezies der GGBS-Schwefelverbindungen, in farblose Schwefelspezies umwandelt;
   • mindestens einen Oxidationskatalysator OC in der Oxidationsreaktion;
   • gegebenenfalls mindestens ein Dispergiermittel zum Dispergieren von O und/oder OC in einem wässrigen Medium;

   zum Entfärben von gehärteten GGBS-haltigen Zusammensetzungen, insbesondere Mörtel- oder Zementzusammensetzungen.

**Revendications**

1. Liant à base de laitier de haut-fourneau granulé et broyé (GGBS) comprenant :

   • au moins un GGBS ;
   • au moins un oxydant O des composés soufrés de GGBS, en particulier de l'espèce $S_3^-$ desdits composés soufrés de GGBS, dans la réaction d'oxydation qui transforme les composés soufrés de GGBS, en particulier de l'espèce $S_3^-$ desdits composés soufrés de GGBS, en espèce soufrée incolore ;
   • et au moins un catalyseur d'oxydation OC dans ladite réaction d'oxydation.

2. Liant selon la revendication 1, dans lequel O est différent de OC et/ou est consommé au cours de ladite réaction d'oxydation de sorte que la concentration initiale $[O^i]$ en % en poids/poids du poids sec de GGBS, est réduite d'au moins, dans un ordre croissant de préférence, 50 %, 60 %, 70 %, 80 %, 90 %, 95 %, 99 %.

3. Liant selon la revendication 1 ou 2 comprenant au moins un agent dispersant pour disperser O et/ou OC dans un milieu aqueux.

4. Liant selon au moins l'une des revendications précédentes, dans lequel la concentration [O] en oxydant O exprimée en % en poids/poids du poids sec de GGBS, et donnée ci-après dans un ordre croissant de préférence, est :

$$0,5 \le [O] \le 15 \; ; \; 0,7 \le [O] \le 10 \; ; \; 0,8 \le [O] \le 8 \; ; \; 0,9 \le [O] \le 6.$$

5. Liant selon au moins l'une des revendications précédentes, dans lequel l'oxydant O est choisi dans le groupe comprenant - ou mieux encore consistant en - :

- les peroxydes, de préférence $H_2O_2$, les peroxydes de calcium ;
- les sels de peroxydes, de préférence les perborates, les persulfates, les sels peroxydisulfuriques, de manière davantage préférée le persulfate de sodium ;
- les halogènes, de préférence les halogènes dont l'état d'oxydation est supérieur ou égal à 1, de manière davantage préférée les sels d'oxo-acides halogénés ; les chlorates (I), (III), (V) et/ou (VII), les iodates, les periodates, les bromates, les borates, les perborates, de manière davantage préférée le bromate de sodium, l'iodate de sodium ;
- les peroxhydrates ;
- les sels de sulfite, de préférence les sulfites de sodium ;
- et les mélanges de ceux-ci.

6. Procédé de préparation du liant à base de GGBS selon au moins l'une des revendications précédentes, comprenant le mélange d'au moins un GGBS avec au moins un oxydant O et au moins un catalyseur d'oxydation OC des composés soufrés de GGBS, en particulier de l'espèce $S_3^-$ desdits composés soufrés de GGBS.

7. Composition, en particulier composition de mortier ou de béton, comprenant :

- au moins un liant à base de GGBS selon au moins l'une des revendications 1 à 5,
- éventuellement au moins un liant hydraulique différent du liant à base de GGBS, ledit liant hydraulique étant de préférence sélectionné dans le groupe comprenant - ou mieux encore consistant en - : les ciments Portland, les ciments Portland à cendres volantes, le ciment Portland à la pouzzolane, les ciments Portland à la fumée de silice, les ciments à maçonner, les ciments expansifs, les ciments blancs mélangés, les ciments colorés, les ciments très finement broyés, les ciments pouzzolane-chaux, les ciments sursulfatés, les ciments de sulfoaluminate de calcium, les ciments « naturels », les ciments géopolymères, le métasilicate de sodium et les mélanges de ceux-ci ;
- et des granulats,
- et, facultativement au moins un additif.

8. Procédé de préparation de la composition selon la revendication 7 comprenant le mélange de tous les composants de la composition, et dans lequel, de préférence, une dispersion aqueuse d'au moins un oxydant O et/ou d'au moins un catalyseur d'oxydation OC est préparée et est mélangée avec un GGBS, ledit procédé comprenant de manière davantage préférée une étape de durcissement de ladite dispersion aqueuse et/ou du mélange de ladite dispersion aqueuse avec un GGBS, ladite étape de durcissement consistant à placer ladite dispersion aqueuse et/ou ledit mélange à une température supérieure ou égale à égale à 30 °C, de préférence comprise entre 35 °C et 50 °C, pendant au moins 0,5 h, de préférence entre 1 h et 48 h, sous atmosphère ambiante.

9. Procédé de préparation d'une formulation humide, comprenant le mélange d'eau avec une partie ou la totalité du liant à base de GGBS selon au moins l'une des revendications 1 à 5 ou obtenu à partir du procédé selon la revendication 6, et/ou avec une partie ou la totalité de la composition selon la revendication 7 ou obtenue à partir du procédé selon la revendication 8,
dans lequel, de préférence, une dispersion aqueuse d'au moins un oxydant O et/ou d'au moins un catalyseur d'oxydation OC est préparée et est mélangée avec un GGBS, ledit procédé comprenant de manière davantage préférée une étape de durcissement de ladite dispersion aqueuse et/ou du mélange de ladite dispersion aqueuse avec un GGBS, ladite étape de durcissement consistant à placer ladite dispersion aqueuse et/ou ledit mélange à une température supérieure ou égale à égale à 30 °C, de préférence comprise entre 35 °C et 50 °C, pendant au moins 0,5 h, de préférence entre 1 h et 48 h, sous atmosphère ambiante.

10. Procédé de fabrication de bâtiments ou d'ouvrages de génie civil ou d'éléments de ceux-ci, d'enrobages, d'enduits, de chapes, de colles à carrelage et/ou de systèmes d'isolation intérieure ou extérieure, à partir de la formulation humide préparée selon le procédé selon la revendication 9, qui durcit au contact de l'air.

11. Utilisation

- d'au moins un oxydant O des composés soufrés de GGBS, en particulier de l'espèce $S_3^-$ desdits composés soufrés de GGBS, dans la réaction d'oxydation qui transforme les composés soufrés de GGBS, en particulier de l'espèce $S_3^-$ desdits composés soufrés de GGBS, en espèce soufrée incolore ;
- d'au moins un catalyseur d'oxydation OC dans ladite réaction d'oxydation ;
- éventuellement d'au moins un agent dispersant pour disperser O et/ou OC dans un milieu aqueux ;

pour décolorer des compositions durcies contenant un GGBS, en particulier des compositions de mortiers ou de ciments.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012083384 A1
- WO 2014013199 A1
- JP 2009091207 A
- JP H0781986 A